# EUROPEAN PATENT APPLICATION

(11) **EP 4 398 153 A1**
(43) Date of publication of application: **10.07.2024**
(21) Application number: 23150283.2
(22) Date of filing: 04.01.2023
(51) Int. Cl.: G06N 3/044, H04L 9/40

(54) **PRIVACY POLICY RECOMMENDATION**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer-implemented method is provided for providing a privacy policy recommendation, the method comprising steps of: retrieving one or more analysis results, each of the one or more analysis results being generated by analysing an input dataset comprising one or more data attributes by performing one or more analytics functions, and each of the one or more data attributes having an anonymised format or a non-anonymised format; determining, for each of the analytics functions, the data attributes of a first type, the data attributes of the first type being a set of the one or more data attributes that need to have non-anonymised formats in order for the corresponding analysis result to have an acceptable level of accuracy and/or quality; and generating the privacy policy recommendation indicating, for each of the analytics function, that the data attributes of the first type need to be in non-anonymised formats. A corresponding computer system and computer program are also provided.

## Description

### TECHNICAL FIELD

The invention relates to a computer-implemented method for use in recommending a privacy policy along with a corresponding computer system and computer program.

### BACKGROUND

Sharing of cyber security data and threat intelligence among different companies and organisations is very important to improve the capacity of each organisation to defend their networks and IT assets against potential cyber-attacks and be aware of emerging security threats. Security analysts can already perform useful analytics on their own organisation's data to detect anomalies or recognise known attack patterns. If security data from other organisations can be merged or aggregated, much more useful information and insights can be derived from the analysis and used to prioritise specific security incidents, or to prepare the organisation and mitigate the impacts of incoming security threats, e.g. malware outbreaks.

However, confidentiality and privacy concerns are still the big barrier for organisations to share their data, especially in the light of various data protection laws. In order to protect the confidential information and privacy of organisations or individuals some portions of the data (i.e. its attributes) must be anonymised in such a way that any information contained in the data cannot be linked to any individuals or organisations without their consents. While it is obvious that identity information such as full person or organisation name should be anonymised or removed completely to protect their privacy, the status for other types of information such as a person's age, machine's IP address or Operating System is not directly clear whether they can be provided as clear text or not. Furthermore, since the main purpose of information sharing is to allow data to be aggregated and made available to advanced, collaborative data analytics functions, any change or modification of the contained information should not make the data useless for analytics.

Accordingly, a method of preserving an acceptable level of data utility that is sufficient to enable useful analytics (e.g. to detect potential malware outbreak in specific geographical region or industry sector) whilst modifying data in order to reduce privacy risk (i.e. re-identification risk) is desirable.

### SUMMARY OF INVENTION

The invention is defined in the independent claims. Embodiments of the invention are set out in the dependent claims.

The present invention describes a method for providing a privacy policy recommendation for preserving acceptable level of data utility that is sufficient to enable useful analytics whilst modifying data in order to reduce privacy risk.

According to a first aspect, a computer-implemented method is provided, the method comprising steps of: retrieving one or more analysis results, each of the one or more analysis results being generated by analysing an input dataset comprising one or more data attributes by performing one or more analytics functions, and each of the one or more data attributes having an anonymised format or a non-anonymised format; determining, for each of the analytics functions, the data attributes of a first type, the data attributes of the first type being a set of the one or more data attributes that need to have non-anonymised formats in order for the corresponding analysis result to have an acceptable level of accuracy and/or quality; and generating the privacy policy recommendation indicating, for each of the analytics function, that the data attributes of the first type need to be in non-anonymised formats.

Embodiments may therefore automatically generate a privacy policy recommendation based on which one or more data privacy policies may be modified, thereby simplifying the process of creating such data privacy policies which would otherwise be a complex manual process that often present difficulties to data policy creators (e.g. data policy officers). Such recommendations may, in turn, enable one or more data sources to share data to a data sharing and/or analytics platform in a manner that provides consistent privacy and confidentiality levels, and an optimal balance between privacy and data utility.

According to a second aspect there is provided a computer system configured to carry out the method of the first aspect.

According to a third aspect, a non-transitory computer readable medium having stored thereon a computer program that, when run on a system according to the second aspect, causes the system to perform methods according to the first aspect.

### BRIEF DESCRIPTION OF THE DRAWINGS

The disclosure will be further described, by way of example only, with reference to the accompanying drawings, in which
Figure 1 illustrates an exemplary table of data privacy settings for security logs;
Figure 2 illustrates an exemplary data sharing platform;
Figure 3 illustrates an exemplary data sharing platform with a Privacy Policy Recommendation Engine (PPRE), according to an embodiment;
Figure 4 illustrates an exemplary Restricted Boltzmann Machine (RBM), according to an embodiment;
Figure 5 illustrates an exemplary training sample for an IDS security log, according to an embodiment;
Figure 6 illustrates an exemplary RBM with visible units observed for three types of security logs, according to an embodiment;
Figure 7 illustrates an exemplary reconstruction of input parameters to provide data policy recommendations, according to an embodiment; and
Figure 8 illustrates a flow diagram of exemplary steps for training a RBM and provide policy directives recommendations, according to an embodiment.

### DETAILED DESCRIPTION OF THE INVENTION

Embodiments and related technology helpful for understanding and implementing the embodiments will now be described with reference to the Figures. The same or similar reference numerals are used to refer to the same or similar components across different Figures.

For controlling access to particular information or data as well as providing obligations that need to be fulfilled before accessing and/or using the information and/or data for analytics purposes, one or more policies (e.g. privacy policies) may be used. For example, a policy can determine which data attributes should be anonymised before they can be shared with other organisations or units for data analytics purposes. Such policies may, for example, be expressed in eXtensible Access Control Markup Language (XACML) syntax.

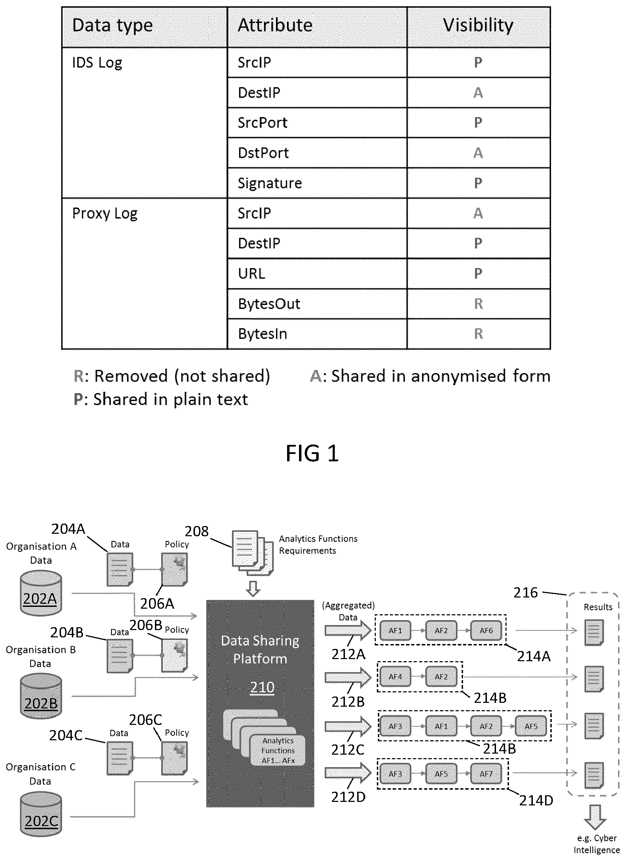

Figure 1 shows an example of a table including data privacy settings for two types of security logs. In the example of
Figure 1, the data owner is willing to share the Intrusion Detection System (IDS) logs of his/her organisation but with the restrictions that only the source IP, source port and (detected) IDS signature names are provided in plain text. Other attributes such as the destination IP and destination port are deemed too sensitive and can only be shared in anonymised form. In case of their proxy logs, the source IP needs to be anonymised and information about the number of outgoing and incoming packet bytes cannot be shared at all (i.e. removed from the dataset). Such privacy settings would normally be created by someone (i.e. data policy officer) in the organisation who has strong knowledge of the sensitivity nature of the data involved and is familiar with the organisation's privacy policy and other data protection regulations (e.g. GDPR).

Figure 2 shows an example of a cyber data sharing platform 210. The cyber data sharing platform 210 in the example shown in Figure 2 allows multiple organisations (Organisations A-C) to share their cyber-security data 204A-C and make the shared cyber-security data 204A-C available for analytics purposes. However, in other embodiments the cyber data sharing platform 210 may allow multiple units of a single organisation to share their cyber-security data 204A-C and make the shared cyber-security data 204A-C available for analytics. Using the aggregated data 212A-C from the cyber data sharing platform 210, analysts may perform a set of in-built Analytics Functions (AF) 214A-D, such as data grouping, clustering and mean value calculation to produce analysis results. A data privacy policy 206A-C is assigned to each data set 204A-C uploaded to the cyber data sharing platform 210 in order to control how each data attribute (i.e. a data field) should be presented (i.e. in plain text or anonymised form) before they are shared and used by the analysts. Each analytics function 214A-D would have its own set of requirements 208 with regard to the input data attributes and formats in order to allow the function to work correctly and produce the expected results. Hence it is important that the data policy 206A-C and its specified obligations are "aligned" with the analytics functions requirements 208, as otherwise the data could not be used by the analytics function 214A-D. Creating such data policies 206A-C is normally a manual process, which often present difficulties to data policy creators as a variety of analytics functions and their corresponding results would need to be taken into account during the process in order to find the right balance between privacy and data utility.

In general one of the following anonymisation or transformation techniques can be used to hide sensitive information:
Masking: replaces sensitive information with random characters or data while retaining the original data format. For example, the IP address ` 132.123.112.58' could be transformed to '132.123.YYY.ZZZ' in order to prevent unique identification of the host machine.
Suppression: removes selected information to protect the privacy of the entities (e.g. individuals, organisations, etc.). Suppression is normally applied to directly identifying information. For example, a user's full name or username attribute is removed completely from the data records.
Generalisation: is a technique to remove specificity from the data. For example, the port number '80' is generalised to '[50,100[', the attack type `Ping of Death' is generalised to `DoS (Denial of Service)'.
Tokenisation: is a technique to substitute a sensitive data element with a non-sensitive equivalent, referred to as a token that has no extrinsic or exploitable meaning or value. The underlying tokenisation system allows mapping the tokens back to the sensitive (original) data and should therefore be adequately protected. For example, the username 'james.smith11' could be tokenised to `USER-002'.

Generally, embodiments aim at protecting sensitive information and privacy of any individuals and/or organisations involved in the datasets that may be shared with one or more other organisations and/or one or more other units in the same organisation, while at the same time maintaining acceptable level of data utility for advanced analytics purposes. In general, one or more of the following issues of current data sharing and analytics platform are being addressed by embodiments:
1. Shared data can only be useful if its associated sharing policy matches the requirements of the analytics function consuming the data (also in aggregation).
2. Analytics function (i.e. its users/developers) may put higher requirements on the set of data attributes than it actually needed to produce its results.
3. Overly-high requirements of data attributes or data fields may prevent or discourage data owners (or data policy officer) to share their data.
4. The sharing and analytics platform becomes inflexible because of the "rigid" requirements of the in-built analytics functions.
5. If the policy is too relaxed, e.g. all data attributes are available in plain text, the privacy of each individual or organisation included in the (shared) data may be at risk.
6. It is difficult for data owners to define optimal data privacy policies that strike the right balance between privacy/confidentiality and data utility.

Preferably, recommendation of effective data privacy policies for protecting sensitive information against unconsented disclosure may be provided by using a machine learning method.

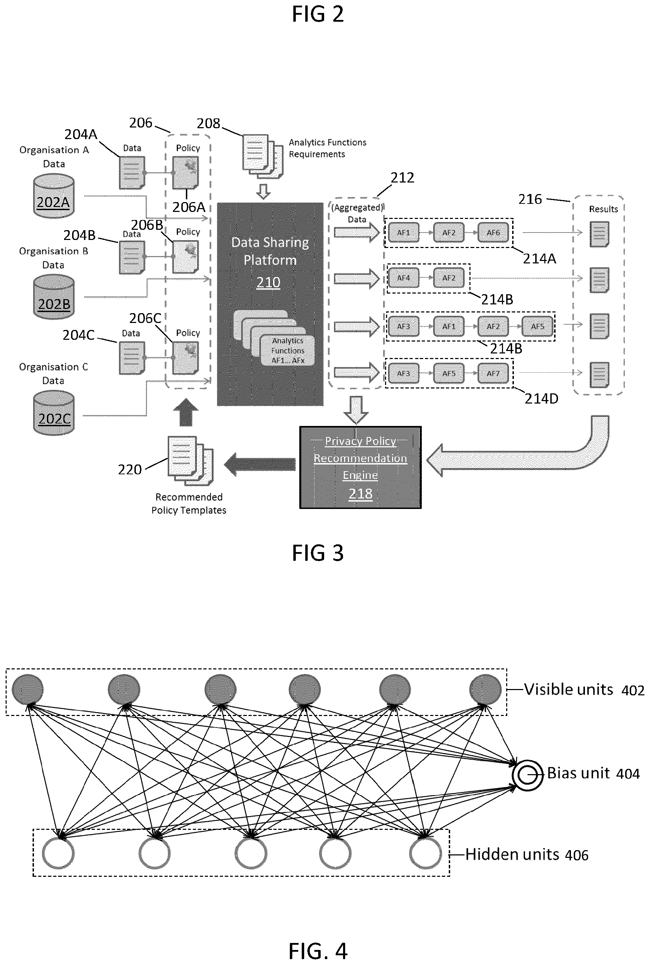

Figure 3 shows an exemplary cyber data sharing platform 210 according to an embodiment. As shown in Figure 3, the cyber data sharing platform 210 may comprise or be configured to function with an additional new component called Privacy Policy Recommendation Engine (PPRE) 218. Although the PPRE 218 in the example of Figure 3 is depicted as a separate component, the PPRE 218 in other embodiments may be integrated with or distributed among the cyber data sharing platform 210 and/or one or more components configured to function therewith.

One of the objectives of the PPRE 218 is to strike the right balance between data privacy and data utility in order to allow security analysts to use the sanitised, shared datasets to produce acceptable analysis results 216 (e.g. for cyber intelligence). This is because performing an analysis based on an anonymised input dataset does not necessarily prevent or reduce the quality of the analysis. For example, consider a firewall dataset that might be shared with both its source and destination IP address attributes presented in anonymised forms (e.g. using tokenisation method). If the objective of an analysis is to determine whether or not there has been a DDoS attack on any of the hosts, a security analyst may still be able to use the anonymised dataset to find the answer. Although the original source and destination IP address values have been replaced with meaningless token values, each unique IP address was consistently mapped to the same, unique token value. This way the security analysts only needs to group the data points that are characterised by a high number of different token values as source IP and a single token value as destination IP for a certain period of time in order to determine the occurrence of a DDoS attack. Therefore, the PPRE 218 aims to provide privacy policy recommendations which may, for example, be provided by producing data privacy policy templates, by using the following multi-step approach:
1. The PPRE 218 may analyse similarities among the used analytics functions 214A-D in terms of their ability to produce acceptable results out of sanitised input datasets. An analytics function 214A-D may either be a simple aggregation function such as grouping or average function, or more advanced such as clustering or anomaly detection. A sequence of mixed analytics functions 214A-D may be considered another new analytics function (e.g. an advanced function to determine the type of potential denial of service attack).
2. The PPRE 218 may observe and learn patterns from the analysis tasks carried out by different analysts or users (of the same or different organisations) when consuming the sanitised datasets in conjunction with various types of analytics functions 214A-D. Optionally, human analysts may also be represented by a computer program which performs a sequence of mathematical and analytics functions to produce specific analysis results.
3. The PPRE 218 may determine the optimal set of input data attributes either in plain text or anonymised forms that are required by relevant analytics functions to produce analysis results 216 with different levels of accuracy and quality. An analysis result 216 can be minimum and generic. For example, if only the timestamp attribute is provided in plain text and the others are anonymised (including source and destination IP) then the analytics function can only determine whether or not a distributed denial of service (DDoS) attack has happened. On the other hand, if more information such as packet size is also provided in plain text the type of DDoS attack can then be determined, e.g. "ICMP DDoS".
4. The PPRE 218 may provide recommendations of effective privacy policy 220. One or more recommendations of effective privacy policy 220 may be provided for each type of data (e.g. security logs) as the importance and sensitivity of each data attribute such as source IP or source port may not always be the same for different type of security logs such as IDS or WebProxy logs. Therefore, different privacy and confidentiality settings may need to be applied to the same data attributes provided by different data sources.

Optionally, the PPRE 218 may employ a machine learning algorithm to learn the links and relationships among the presented data attributes of different security logs and the respective analysis results 216 through the observation of analysis tasks performed by multiple analysts and analytics functions 214A-D. In particular, the algorithm may learn the weights applicable to the utilisation of each data attribute (either in plain text or anonymised form) that lead to specific analysis outcomes. In such cases, a trained machine learning model would eventually be able to reflect the fact that the higher the weight assigned to a specific data attribute (e.g. source IP) presented in specific form, the more frequently that attribute has been used to produce results with certain level(s) of accuracy, quality and/or accuracy (i.e. the attribute has higher impact and significance on those results).

The PPRE 218 may be implemented by using a Restricted Boltzmann Machine (RBM). The RBM is a stochastic neural network, i.e. a network of neurons where each neuron has some random behaviour when activated. It consists of one layer of visible units (neurons) 402, one layer of hidden units 406 and a bias unit 404. Each visible unit 402 is connected to all the hidden units 406 (this connection is undirected, so each hidden unit 406 is also connected to all the visible units 402), and the bias unit 404 is connected to all the visible and hidden units 402, 406. The bias unit 404 is used to allow other units 402, 406 to learn an appropriate threshold. As shown in an exemplary illustration of the RBM in Figure 4, no visible unit 402 is connected to any other visible unit 402 and no hidden unit 406 is connected to any other hidden unit 406. After successful learning, the RBM can provide a closed-form representation of the distribution underlying the training data.

RBMs have found applications in dimensionality reduction, classification, collaborative filtering, feature learning and topic modelling. In the context of the present embodiments, the PPRE 218 may use a RBM for collaborative filtering which is the process of filtering for information or patterns using techniques involving collaboration among multiple agents, viewpoints, data sources, etc. In such cases, the visible units 402 correspond to the utilisation of data attributes of each type of security logs presented in specific form (plain text or anonymised) that have been observed from analysis tasks performed by the analysts. The hidden units 406 represent the latent factors underlying the observed data utilisation. The PPRE 218 may be configured to learn these latent units and correspond them with the different types, and level(s) of accuracy, quality and/or accuracy of analysis results 216.

Optionally, at least one parameter indicating level of accuracy and/or quality of an analysis result 216 may be used. Optionally, such a parameter may indicate a level of accuracy of an analysis result 216 by indicating if an analysis result 216 correctly indicates a presence of a potential and/or current cyber-security attack (e.g. denial of service attack) and/or communication with one or more malicious external hosts. For example, the parameter may be in a numerical form, and the parameter may have a higher value to indicate a higher level of accuracy, and a lower value to indicate a lower level of accuracy. Alternatively, the parameter may be in a non-numerical form (e.g. accurate, likely to be accurate, inaccurate, likely to be inaccurate, and/or not-known).

Optionally, such a parameter may indicate a level of quality of an analysis result 216 by indicating a level of details included in the analysis result 216. Optionally, the parameter may be in a numerical form, and the parameter may have a higher value to indicate a higher level of quality, and a lower value to indicate a lower level of quality. For example, an analysis with a mere indication of a presence of a potential and/or current cyber-security attack only (e.g. indicating a DDoS attack in the network without indicating the target host/IP address) may have a lower parameter value than an analysis with further details (e.g. type of the DDos attack, target host/IP address, and/or geo-location of an attack target) of a potential and/or current cyber-security attack alongside an indication of a presence of the attack. Similarly. an analysis with a lower level of details (e.g. general geo-location of an attack target) may have a lower parameter value than an analysis with a higher level of details (e.g. an exact address of the attack target).

Optionally, one or more parameters may be in a form of an array (e.g. a matrix) having one or more elements included therein. In such cases, the elements may comprise at least one element for indicating a presence of a potential and/or current cyber-security attack and/or at least one element for indicating a level of details included in the analysis result 216. Optionally, a plurality of elements for indicating levels of details of different types of details of the attack may be included in such an array.

Optionally, the accuracy and/or quality of an analysis result 216 may be determined by receiving an input from an analyst. In such cases, the analyst may input one or more parameters indicating levels of accuracy, quality and/or accuracy of corresponding analysis results 216. Alternatively, the accuracy and/or quality of an analysis result 216 may be determined automatically by using a computer program and/or a machine learning method by comparing one or more analysis results 216 and/or one or more data logs of known events.

Optionally, an analysis results 216 may be determined to have acceptable level(s) of accuracy, quality and/or accuracy analysis results 216 if the corresponding parameter(s) associated with the analysis results 216 exceed a threshold. Such a threshold may be predetermined or determined by using a machine learning method (e.g. RMB).

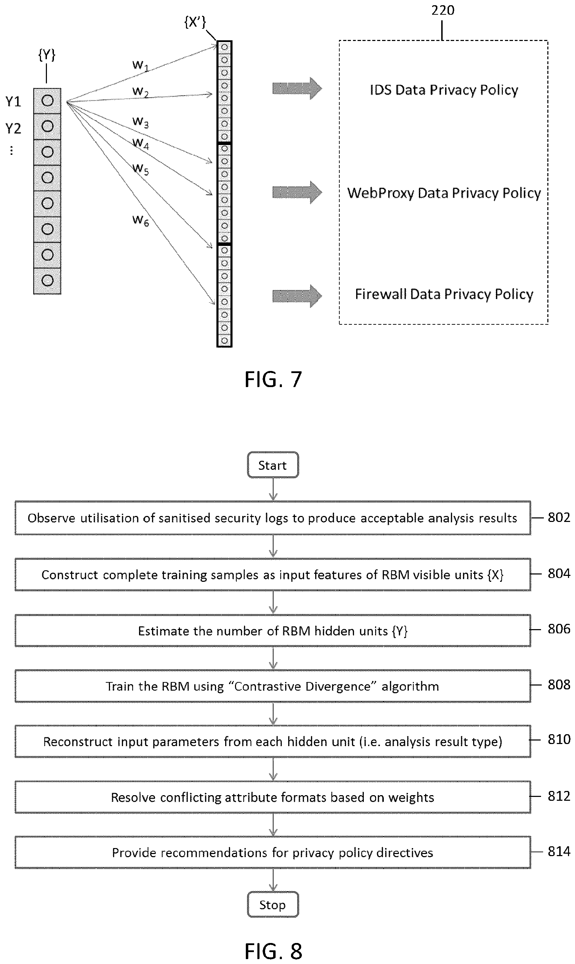

Figure 8 is a flow chart illustrating an exemplary steps of the PPRE 218 implementation for training its RBM and, eventually, for providing policy recommendations, which will be described below in detail in relation to Figure 3 to Figure 7. The observation 802 and the subsequent training steps 804, 806, 808, 810, 812 may be repeated regularly (e.g. once a month) and/or when any significant changes have been made in the sharing and analytics platform (e.g. new types of security logs or analytics functions being introduced to support new types of analysis or improve existing ones).

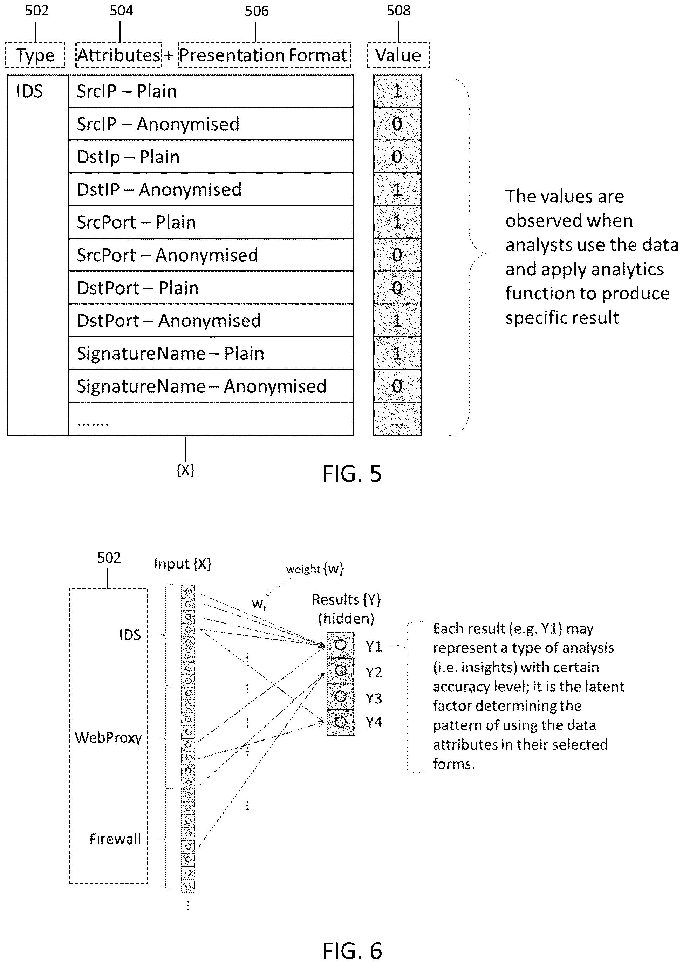

Figure 5 shows an example of a training sample for an IDS security log. Each training dataset or sample {X} (i.e. input features for the visible units 402) may comprise a list of presented attributes 504 for a specific security log 502 (e.g. IDS log). Optionally, the analytics functions requirements 208 provided to the data sharing platform may have already been taken into account when ingesting the datasets into the platform. This way any redundant attributes can be removed from the dataset at the beginning of the process in order to optimise the resource allocation within the platform. Each remaining data attribute 504 may be paired with its presentation format 506 as it was consumed by the analytics function 214. In other words, the format shows whether the corresponding data attribute 506 was provided in a non-anonymised format (e.g. plain text) or anonymised format (e.g. as specified by the associated data policy 206). The binary values 508 may be assigned to each attribute-format pair to indicate if the corresponding combination (i.e. the corresponding pair of data attribute 504 presentation format 506) has been used for the analytics function 214. In principle, for each training sample the data attribute of specific type of log may only be consumed in one way (i.e. either in plain text or anonymised form).

The input features (i.e. data attribute 504-presentation format 506 pairs) for different types 502 of security logs (e.g. IDS, WebProxy, Firewall, etc.) may then be combined together to a complete training sample representing the RBM visible units 402. In case the observed analysis task does not consume a specific type of security log, zero values will be assigned to the respective attribute-format pairs. Figure 6 shows an example of the RBM with utilisation of three types 502 of security logs as visible units {X} and four hidden units {Y} which correspond to four types of analysis results 216. In some cases, at least some of the analysis results 216 may be of the same type or similar types. For example, some of the analysis results 216 may be of the same type with different levels of accuracy and/or quality (e.g. "ICMP DDoS" vs "General DDoS" attacks). Therefore, the hidden units {Y} may also represent the different levels of accuracy and/or quality of the corresponding analysis. As shown in Figure 6 a weight vector {w} may be used to indicate how significant each of the data attributes of its selected presentation format contributes to each analysis result or level of accuracy and/or quality. A RBM training phase for determining the weight vector {w} is described below.

The number of hidden units (four (Y1-Y4) in the example shown in Figure 6) may represent the number of different types of analysis results as well as their accuracy levels. This number can, for example, be collectively obtained from the analysts by asking them to indicate the type and accuracy of results (e.g. attack family/classification being identified, services being targeted, etc.) from a given list each time they completed the analysis tasks.

In order to train the RBM, an algorithm known as Contrastive Divergence Learning may optionally be used. Contrastive Divergence Learning performs a number of iterations to compute the states of hidden units 406 based on the states of visible units 402, and vice versa. The states of visible units 402 are reconstructed from the hidden units 406. The number of iterations increases with learning steps to achieve better accuracy. The number of hidden units 406 is estimated at the start of training phase and may also increase to achieve better accuracy.

An estimation of the number of hidden units 406 may be based on the number of available analysis results. The precise implementation may depends on how the analytics platform is designed and implemented and it is also possible that the number of analysis result types are fixed. Otherwise, an educated guess of the number (i.e. a likely small number) could be used as starting point at the beginning of the training while calculating the weights in the RBM. In a number of training iterations the number can be increased gradually to see if there is any significant change in the mean reconstruction loss/error (when {Y} is being reconstructed to {X}). If the reconstruction error is still too high it would mean that there are not enough hidden units in the model. Having too few hidden units will give poor prediction/accuracy while having too many units will overfit the training data. One method/algorithm that could be used to estimate the right number of hidden units is the "Projection Pursuit" method as described in "Y. Freund, D. Haussler: Unsupervised learning of distributions on binary vectors using two layer networks. 1991". NIPS (NeurIPS) 2 December 1991.

The trained RBM may generate a model for the joint probability distribution of all inputs consisting of features set {X}. The model may be a stochastic model which is a tool for estimating probability distributions of potential outcomes by allowing for random variation in one or more inputs over time. The stochastic model is mainly represented by the computed weights {w} of the connections between visible and hidden units 402, 406. Each hidden unit (i.e. Y1, Y2, etc.) may then be used to reconstruct the set of input features that have activated a corresponding hidden unit as illustrated in Figure 7. The weights {w} give indication of the significance of attribute-format pair on the result. Hence, if the reconstruction has resulted in the same attribute name being paired both formats (e.g. Source IP address of an IDS log being in plain text and anonymised form) the one with a higher weight is chosen. The final set of reconstructed input parameters may then be used to generate one or more privacy policy recommendations 220 (e.g. in the form of data privacy policy templates) recommending which data attributes of the associated security log should be shared in a non-anonymised format (e.g. plain text) or an anonymised format in order to produce an analysis result with certain level(s) of accuracy and/or quality.

As illustrated in Figure 7 the reconstructed input parameters {X'} are reconstructed depending on the hidden unit {Y} selected. This means that the PPRE 218 may generate different policy recommendations 220 for each type of analysis result 216. The data sharing and analytics platform may enforce such multiple policy directives to better protect the privacy and confidentiality of the data owners by revealing the sensitive information on an "as-needed" basis (i.e. to allow higher level of granularity of protection). This may be implemented by providing encryption when the original data are stored in the platform. Whenever the data is requested by an analyst to produce certain results the associated policy directives may apply any necessary privacy measures (e.g. anonymisation, attributes removal) on the sensitive data before making them available to the relevant analytics functions.

It will be understood by those skilled in the art that the apparatus that embodies the invention could be a general purpose device (or group of devices) having software arranged to provide an embodiment of the invention. Furthermore, any or all of the software used to implement the invention can be contained on various storage mediums such as a floppy disc, CD-ROM, or magnetic tape so that the program(s) can be loaded onto one or more general purpose devices, or could be downloaded over a network.

The computer-implemented method described above may be implemented in a form of computer program. The computer program may be stored in at least one memory of at least one computer system. The computer system may also comprise at least one processor configured to perform the computer program. Optionally, the computer system may be connected to and/or form a part of the computer network.

## Claims

1. A computer-implemented method for providing a privacy policy recommendation, the method comprising steps of:
retrieving one or more analysis results,
each of the one or more analysis results being generated by analysing an input dataset comprising one or more data attributes by performing one or more analytics functions, and
each of the one or more data attributes having an anonymised format or a non-anonymised format;
determining, for each of the analytics functions, the data attributes of a first type,
the data attributes of the first type being a set of the one or more data attributes that need to have non-anonymised formats in order for the corresponding analysis result to have an acceptable level of accuracy and/or quality; and
generating the privacy policy recommendation indicating, for each of the analytics function, that the data attributes of the first type need to be in non-anonymised formats.

2. The method of claim 1, wherein each of the one or more analysis results is associated with a parameter indicating a level of accuracy and/or quality of the analysis results.

3. The method of claim 2, wherein the data attributes of the first type, for each of the analytics functions, is determined by comparing the parameter associated with the corresponding analysis result with a threshold.

4. The method of any of the preceding claims, wherein the input dataset comprises input data retrieved from one or more data sources, the input data retrieved from each of the one or more data sources comprising one or more data attributes.

5. The method of claim 4, wherein the input data from at least one of the data sources comprises security logs, such as Intrusion Detection System (IDS), WebProxy, and/or firewall logs.

6. The method of claims 4 or 5, wherein formats of at least one of the one or more data attributes of the input data from at least one of the one or more data sources are determined based on one or more privacy policies, the formats being either anonymised or non-anonymised.

7. The method of claim 6, wherein at least one of the one or more privacy policies are modified based on the privacy policy recommendation.

8. The method of any of the preceding claims, wherein the data attributes of the first type, for each of the analytics functions, are determined by performing steps comprising:
determining data attributes used for the corresponding analytics function based on at least one analysis result generated at least in part by performing the corresponding analytic function;
determining a data attribute format of each of the data attributes used for the corresponding analytics function;
assigning a weight to each combination of the data attribute and data attribute format, wherein the weight indicates how frequently the corresponding combination of the data attribute and data attribute format was used to generate analysis results with an acceptable level of accuracy and/or quality; and
determining the data attributes of the first type, for each of the analytics functions based on the weights assigned to the combinations of the data attributes and data attribute formats.

9. The method of claim 8, wherein the data attributes of the first type, for each of the analytics functions, are determined by using a Restricted Boltzmann Machine (RBM).

10. The method of any of the preceding claims, wherein prior to performing the one or more analytics functions, data attributes that are not required for performing the corresponding analytics functions are removed from the input dataset, wherein data attributes that are required for performing each of the analytics functions are defined by a set of known analytics functions requirements.

11. The method of any of the preceding claims, wherein at least one of the analytics functions comprises one or more of: an aggregation function, such as grouping or average function, clustering and anomaly detection; and/or wherein at least one of the analytics functions are for determining a presence and/or type of: a potential and/or current cyber-security attack such as denial of service attack and communication with malicious external hosts.

12. The method of any of the preceding claims, wherein the data attributes having the anonymised format are generated by using one or more anonymisation techniques, such as masking, suppression, generalisation, and tokenisation.

13. The method of any of the preceding claims, further comprising steps of:
determining, for each of the analytics functions, the data attributes of a second type,
the data attributes of the second type being a set of the one or more data attributes that do not need to have non-anonymised formats in order for the corresponding analysis result to have an acceptable level of accuracy and/or quality,
wherein, the privacy policy recommendation further indicates, for each of the analytics functions, that:
the data attributes of the second type do not need to be in non-anonymised formats, or, alternatively,
the data attributes of the second type need to be in anonymised format.

14. A computer system configured to perform the method of any of claims 1 to 13.

15. A non-transitory computer readable medium having stored thereon a computer program that, when run on a system according to claim 14, causes the system to perform the method of any of claims 1 to 13; and/or a computer program that, when run on a system according to claim 14, causes the system to perform the method of any of claims 1 to 13.
